Europäisches Patentamt

European Patent Office

Office européen des brevets

(19)

(11) **EP 0 830 043 A1**

(12) **EUROPÄISCHE PATENTANMELDUNG**

(43) Veröffentlichungstag:
18.03.1998 Patentblatt 1998/12

(51) Int. Cl.⁶: $H04Q\ 7/36$, $H04B\ 7/06$

(21) Anmeldenummer: 96114902.8

(22) Anmeldetag: 17.09.1996

(84) Benannte Vertragsstaaten:
AT BE CH DE DK ES FI FR GB GR IE IT LI LU MC
NL PT SE

(71) Anmelder:
SIEMENS AKTIENGESELLSCHAFT
80333 München (DE)

(72) Erfinder: Lüders, Christian
85540 Haar (DE)

(54) **Basisstation und Verfahren zur Versorgung einer Zelle eines zellularen Mobilfunksystems**

(57)    Eine erfindungsgemäße Basisstation enthält zumindest eine Kombinationseinrichtung, an die zumindest zwei Basisstationszweige zum Versorgen einer Zelle angeschlossen sind. Für jeden Basisstationszweig wird die Übertragungsqualität für eine Kommunikationsverbindung überwacht und entsprechend Basisstationszweige für diese Kommunikationsverbindung in beiden Übertragungsrichtungen zu- bzw. ausgeschaltet. Die Erfindung kann auch in Basisstationen, die Sektorantennen zum Versorgen einer Zelle aufweisen, realisiert werden. Die Erfindung eignet sich insbesondere zum Einsatz in zellularen Mobilfunksystemen, z.B. dem GSM-Mobilfunksystem.

Fig.1

**Beschreibung**

Die Erfindung betrifft eine Basisstation für Kommunikationsverbindungen zu Mobilstationen über Funkschnittstellen und ein Verfahren zur Versorgung einer Zelle eines zellularen Mobilfunksystems.

Mobil-Kommunikationssysteme, z.B. Mobilfunksysteme wie das GSM (Global System for Mobil Communications)-Mobilfunksystem, ermöglichen den Aufbau von Kommunikationsverbindungen von und zu mobilen Teilnehmern, indem über eine Funkschnittstelle Informationen übertragen werden. Auf der Funkschnittstelle können verschiedene Verfahren zur Separierung der Teilnehmer eingesetzt werden, dazu gehören das Zeitmultiplex- und das Frequenzmultiplexverfahren.

Im Mobilfunk werden die Informationen auf der Funkschnittstelle mittels elektromagnetischer Wellen übertragen. Nach der Übertragung über die Funkschnittstelle wird nur ein Teil der Energie von der Empfangsantenne der empfangenden Funkstation absorbiert. In einer typischen Einsatzumgebung eines Mobil-Kommunikationssystems unterliegen die übertragenen Informationen auf der Funkschnittstelle unterschiedlichen Störungen. Die von der Sendestation gesendeten Informationen erreichen eine Empfangsstation über verschiedene Ausbreitungswege, so daß sich bei der Empfangsstation die Signalkomponenten verschiedener Ausbreitungswege überlagern. Zudem können Abschattungen die Übertragung von Informationen von einer Sendestation zur Empfangsstation erheblich behindern. Auch Störer im Frequenzband der jeweiligen Kommunikationsverbindung führen zu einer Beeinträchtigung der Qualität der empfangenen Signale.

Aus der europäischen Patentschrift 0 617 861 B1 ist ein Verfahren zur Verbesserung der Funkzellenausleuchtung bei einem zellularen Mobilfunksystem bekannt. Bei diesem Verfahren werden die Informationen einer Kommunikationsverbindung von mehreren Funkstationen, typischerweise drei Zweigen einer Basisstation, am Rande einer zu versorgenden Zelle zu einer Mobilstation mit einer einzigen Trägerfrequenz übertragen. Die Signale der einzelnen Zweige überlagern sich bei der Mobilstation und führen dadurch zu einer Verbesserung der Qualität der Kommunikationsverbindung. Die von der Mobilstation gesendeten Signale werden von allen die Zelle versorgenden Zweigen der Basisstation empfangen und einem Diversitätskombinations-Verfahren unterzogen. Damit kann auch die Verbindung von der Mobilstation zur Basisstation verbessert werden.

Durch diese Konfiguration einer Basisstation entsteht jedoch ein erheblicher Aufwand, da im Gegensatz zu einer Basisstation, die inmitten einer Zelle eine Rundstrahlcharakteristik aufweist, oder auch im Gegensatz zu konventionellen Sektorzellen, die dreifache Anzahl von Sende- und Empfangseinrichtungen bereitgestellt werden muß. Eine Verbesserung der Übertragungsqualität ist damit nur unter stark erhöhtem schaltungstechnischen Aufwand möglich, so daß das Verfahren für einen Mobilfunknetzbetreiber sehr teuer ist.

Der Erfindung liegt die Aufgabe zugrunde, eine Basisstation und ein Verfahren zur Versorgung einer Zelle eines zellularen Mobilfunksystems anzugeben, die unter Beibehaltung der Vorzüge der Mehrfachverbindung den Aufwand zur Versorgung einer Zelle verringern. Die Aufgabe wird durch die Basisstation nach den Merkmalen des Patentanspruches 1 und durch das Verfahren nach den Merkmalen des Patentanspruches 11 gelöst. Vorteilhafte Weiterbildungen sind den Unteransprüchen zu entnehmen.

Gemäß der Erfindung enthält eine Basisstation für Kommunikationsverbindungen zu Mobilstationen über Funkschnittstellen zumindest eine Kombinationseinrichtung.

An diese Kombinationseinrichtung sind zumindest zwei Basisstationenszweige zum Versorgen einer Zelle angeschlossen. Die Kombinationseinrichtung ist zur Überwachung der Übertragungsqualität für eine Kommunikationsverbindung zwischen einer Mobilstation und den zumindest zwei Basisstationenszweigen vorgesehen. Entsprechend der festgestellten Übertragungsqualität für eine Kommunikationsverbindung wird durch die Kombinationseinrichtung eine Zu- bzw. Ausschaltung von weiteren Basisstationenszweigen vorgenommen. Das Zuschalten bzw. Ausschalten erfolgt in beiden Übertragungsrichtungen. Wird ein Basisstationszweig zugeschalten, dann erfolgt für die genannte Kommunikationsverbindung die Informationsübertragung zwischen diesem Basisstationszweig und der Mobilstation in beiden Richtungen zusätzlich zu der bereits erfolgten Informationsübertragung über die bereits zuvor zugeschalteten Basisstationenszweige.

Durch das flexible Zu- bzw. Ausschalten von zusätzlichen Basisstationenszweigen kann die Übertragungsqualität verbessert werden bzw. es ist möglich, bei ausreichender Übertragungsqualität den Aufwand an für eine Kommunikationsverbindung benötigten Basisstationenszweigen zu verringern. Es erfolgt dabei keine Trennung der beiden Übertragungsrichtungen, sondern beide Übertragungsrichtungen werden gemeinsam geschaltet. Dadurch ist es möglich, eine Sende- und Empfangseinheit in einem Basisstationszweig freizusetzen. Die Auswertung und der überwachten Übertragungsqualität und das Auslösen des Zu- bzw. Ausschaltens von Zweigen kann auch durch eine Steuereinrichtung außerhalb der Kombinationseinrichtung veranlaßt werden. In der Kombinationseinrichtung findet vorteilhafterweise auch eine Signalkombination, z.B. Addition, und Verteilung der Empfangssignale der einzelnen Zweige statt.

Die festgestellt Übertragungsqualität wird für die einzelnen Zweige und für die Kommunikationsverbindung insgesamt überprüft. Somit kann festgestellt werden, welche Zweige erforderlich sind, um eine hinreichende Übertragungsqualität zu gewährleisten, und welche nicht. Die entspechenen Zweige werden für die betrachtete Verbindung ein- bzw.

ausgeschaltet. Das Ein- und Auschalten erfolgt in beiden Übertragungsrichtungen. Durch das Freigeben in beiden Übertragungsrichtungen kann die freigewordene Sende- und Empfangseinrichtung am ausgeschalteten Zweig für eine Kommunikationsverbindung einer anderen Mobilstation genutzt werden; d.h. es werden während des Bestehens der Kommunikationsverbindung nicht an allen Zweigen Sende- und Empfangseinrichtungen reserviert, sondern nach Bedarf dynamisch zu- bzw. abgeschaltet. Damit ist es möglich, Sende- und Empfangseinrichtungen unter Beibehaltung der Vorzüge der Mehrfachversorgung besser auszunutzen, d.h. Einsparungen vorzunehmen.

Durch Simulationen wurde unter Verwendung üblicher Funkausbreitungsmodelle und des Modells der Empfangsleistungsaddition bei der Signalkombination der Prozentsatz der Verbindungen ermittelt, die zusätzliche Zweige benötigen (z.B. Empfangspegel kleiner als der mittlere Pegel in der Zelle) und bei denen die zusätzlichen Zweige eine substantielle Verbesserung der Empfangsbedingungen bewirken (z.B. Empfangspegelverbesserung mehr als 1 dB). Dabei erhält man als typisches Ergebnis:

| | |
|---|---|
| Verbindungen mit einem Zweig: | 65 %, |
| Verbindungen mit zwei Zweigen: | 25 %, und |
| Verbindungen mit drei Zweigen: | 10 %. |

Somit ist die mittlere Anzahl von Zweigen pro Verbindung 1.45. Es werden also im Mittel nur etwas 1,5 statt drei Zweige benötigt und ein Einsparung von 50 % an Sende- und Empfangseinrichtungen kann durch die erfindungsgemäße Basisstation realisiert werden.

In der erfindungsgemäßen Basisstation wird eine Basis-Sende/Empfangsstation oder Sektorantenne, die für eine Kommunikationsverbindung abgeschalten wurde, auf einer anderen Trägerfrequenz für eine weitere Kommunikationsverbindung zugeschalten. Durch diese Ausgestaltung ergibt sich eine verbesserte Ausnutzung der Sende- und Empfangseinrichtungen der Basisstation und eine verbesserte Ausnutzung der Systemressourcen zum Zwecke der Steigerung der Netzkapazität. Die Sendeeinrichtungen einer Basisstation sind vorteilhafterweise so ausgestaltet, daß bei einem Zeitmultiplex-Verfahren zeitschlitzbezogen ein Umschalten der Trägerfrequenz möglich ist. Für jeden Zeitschlitz erfolgt damit eine dynamische Zuordnung eines logischen Knals zu einem physikalischen Kanal.

Bei der erfindungsgemäßen Basisstation werden die Basisstationszweige durch Basis-Sende/Empfangsstationen, die jeweils am Rande der Zelle angeordnet sind, oder alternativ durch Sektorantennen, denen unterschiedliche Sektoren einer Zelle zugeordnet sind, gebildet. Im ersten Fall haben die Basis-Sende/Empfangsstationen ein zum Zentrum der Zelle gerichtetes Abstrahlungsdiagramm, währenddessen bei Sektorantennnen, die sowohl durch getrennte Antennen als auch durch eine elektronische Aussteuerung erzeugt werden können, das Abstrahlungsdiagramm jeweils zum Zellenrand weist.

Durch den zweiten Fall, die Unterteilung einer Funkzelle in mehrere schmale Sektoren, läßt sich die Signalqualität dadurch verbessern, daß an der Basisstation Gleichkanalstörungen nur in einem kleinen Winkelbereich empfangen werden (z.B. durch Auswahl des Sektors mit dem besten Empfang). Ferner wird auch von der Basisstation weniger Interferenz für andere Kommunikationsverbindungen verbreitet, da das Sendesignal nicht in alle Richtungen, sondern gezielt, gesendet wird. Auch hierbei ist es möglich, durch dynamisches Zu- und Abschalten von Sende- und Empfangseinrichtungen an den jeweiligen Zweigen Einsparungen unter Beibehaltung der Sektorisierung vorzunehmen.

Gemäß einer vorteilhaften Ausgestaltung der erfindungsgemäßen Basisstation wird diese nach dem Zeitmultiplex-Verfahren betrieben, wobei das Zu- und Ausschalten eines Basisstationszweiges - einer Basis-Sende/Empfangsstationen oder einer Sektorantenne - bezüglich einer Kommunikationsverbindung zeitschlitzbezogen gesteuert ist.

Bei Mobilfunksystemen als ein Einsatzgebiet der Basisstation sind zwischen den Zeitschlitzen gemäß dem Zeitmultiplex-Verfahren Schutzzeiten vorgesehen, während derer die Sendeleistung der Sendestation verringert wird. Diese Schutzzeiten zwischen zwei Zeitschlitzen eignen sich insbesondere zum Umschalten, da bei verringerter Sendeleistung auch die Störeffekte des Umschaltens die Übertragungsqualität nur wenig beeinträchtigen.

Gemäß einer weiteren vorteilhaften Ausgestaltung wird die Überwachung der Übertragungsqualität zyklisch wiederholt. Die Überwachung der Übertragungsqualität kann ermöglicht werden, indem in regelmäßigen oder durch die Übertragungsqualität angeregten Zeitabständen in der Kombinationseinrichtung Übertragungsparameter wie der Signalpegel, das Signalrauschverhältnis oder das Verhältnis von Nutzsignal zu Störsignal für eine Kommunikationsverbindung in jedem einzelnen Zweig gemessen wird oder indem die Bitfehlerrate für jeden einzelnen Zweig bestimmt wird. Die Überwachung kann jedoch auch auf einzelne Zweige beschränkt werden bzw. es wird die Übertragungsqualität aller Zweige als ganzes bestimmt.

Ist zum Überwachungszeitpunkt nicht die maximal mögliche Anzahl von Basisstationszweigen für eine Verbindung zugeschaltet, dann kann durch die Kombinationseinrichtung gesteuert werden, daß zusätzliche Basisstationszweige in die Kommunikationsverbindung zum Zwecke der Überwachung der Übertragungsqualität einbezogen werden.

Vorteilhafterweise erfolgt die Versorgung einer Mobilstation durch mehrere Basisstationszweige auf einer gemeinsamen Trägerfrequenz. Während eines Zeitschlitzes senden also mehrere Basisstationszweige - Basis-Sende/Empfangsstationen oder Sektorantennen - auf einer gemeinsamen Trägerfrequenz, so daß sich bei der Mobilstation die Signalkomponenten zum Gesamtsignal überlagern und ohne vermehrten Aufwand bei den Mobilstationen eine Verbesserung des Empfangs möglich ist. Durch diese Weiterbildung kann eine Modifikation der Basisstation erfolgen, ohne das eine Anpassung der Mobilstationen nötig ist.

Die Basisstationen weisen zumindest einen Organisationskanal auf, dessen Trägerfrequenz gemäß einer vorteilhaften Weiterbildung bevorzugt für Kommunikationsverbindungen genutzt wird, die von mehreren Basisstationszweigen versorgt wird. Da der Organisationskanal unabhängig vom Belastungszustand der Zelle von allen Basisstationszweigen zur Verfügung gestellt wird, kann die Trägerfrequenz dieses Organisationskanals vorteilhafterweise für Kommunikationsverbindungen genutzt werden, die eine große Anzahl von Zweigen belegen. Durch eine solche Vorgehensweise ist es möglich, pro Basis-Sende/Empfangsstation oder Sektorantenne die Anzahl benötigter Trägerfrequenzen lastabhängig zu verringern.

Vorteilhafterweise sind diese physikalischen Kanäle zwischen einer Kombinationseinrichtung und einem Zweig schaltbar, wodurch auch zwischen Kombinationseinrichtung und Basis-Sende-Empfangsstation oder Sektorantenne nur die tatsächlich benötigte Anzahl von physikalischen Kanälen geschalten ist.

In einem unabhängigen Anspruch wird ein Verfahren zur Versorgung einer Zelle eines zellularen Mobilfunksystems angegeben.

Im folgenden wird die erfindungsgemäße Basisstation bzw. das Verfahren zur Versorgung einer Zelle bezugnehmend auf die Figuren anhand von Ausfühungsbeispielen näher erläutert.

Dabei zeigen

FIG 1      ein Blockschaltbild des zellularen Mobilfunksystems,

FIG 2      ein Blockschaltbild einer Basisstation mit drei Basisstationszweigen zur Versorgung einer Zelle,

FIG 3      ein Blockschaltbild einer Basisstation mit zugeordneten Sektorantennen,

FIG 4      eine Funkschnittstelle mit zwei Zeitschlitzen und vier Trägerfrequenzen bei zwei Zweigen, und

FIG 5      eine Funkschnittstelle mit zwei Zeitschlitzen und drei Trägerfrequenzen bei zwei Zweigen.

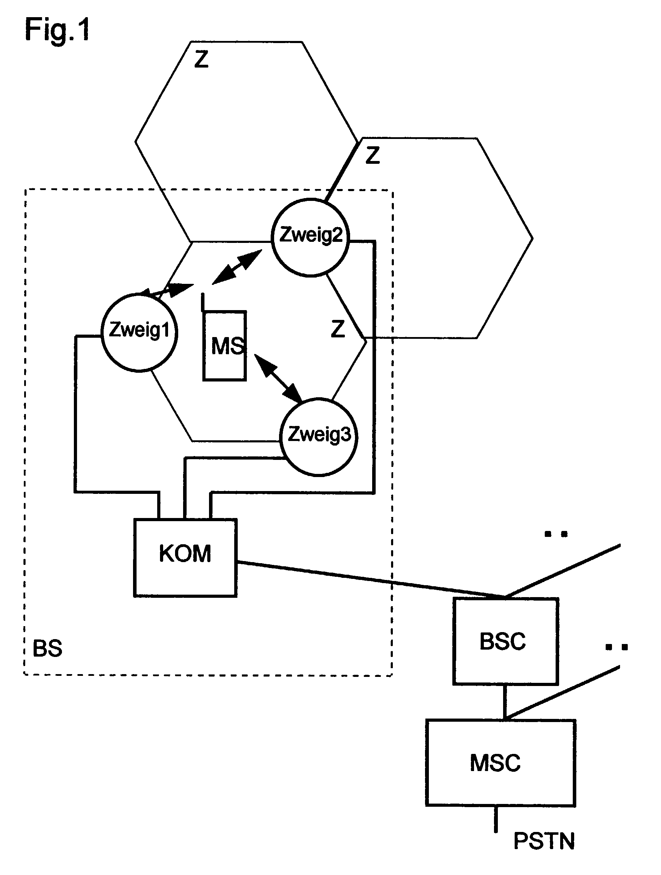

Das in FIG 1 dargestellte Mobil-Kommunikationssystem weist zumindest eine Mobilvermittlungsstelle MSC auf, die mit weiteren Mobilvermittlungsstellen vernetzt ist bzw. den Zugang zu einem Festnetz PSTN herstellt. Weiterhin ist diese Mobilvermittlungsstelle MSC mit zumindest einem Basisstationscontroller BSC verbunden. Jeder Basisstationscontroller BSC ermöglicht wiederum eine Verbindung zu zumindest einer Kombinationseinrichtung KOM. Die Mobilvermittlungsstelle MSC und der Basisstationscontroller BSC sind Anordnungen, wie sie beispielsweise aus dem GSM-Mobilfunksystem bekannt sind.

Die Kombinationseinrichtung KOM ist beispielsweise mit drei Basisstationszweigen Zweig1 bis Zweig3 verbunden. Diese Basisstationszweige Zweig1 bis Zweig3 sind beispielsweise Funkstationen, die über eine Funkschnittstelle eine Kommunikationsverbindung zu Mobilstationen MS aufbauen können. In FIG 1 ist beispielhaft eine solche Funkverbindung zur einer Mobilstation MS dargestellt.

Die Funkschnittstelle zwischen Basisstationszweigen Zweig1 bis Zweig3 und Mobilstation MS ist nach dem Zeitmultiplex-Verfahren organisiert. Auf einer Trägerfrequenz werden so beispielsweise acht Zeitlagen bereitgestellt, die für verschiedene Kommunikationsverbindungen und zur Organisation der Funkschnittstelle genutzt werden können. Einzelheiten zur Organisation der Funkschnittstelle können beispielsweise M.Mouly, M.B.Pautet, „The GSM System for Mobile Communications", 1992, entnommen werden. Die Funkschnittstelle ist weiterhin optional nach dem Frequenzmultiplex-Verfahren organisiert, so daß von einer Funkstation auf mehreren Trägerfrequenzen Kommunikationsverbindungen zu Mobilstationen MS aufgebaut werden können. Ein Funkkanal ist demnach durch seine Trägerfrequenz und durch den Zeitschlitz charakterisiert.

Gemäß FIG 1 sind drei mit einer gemeinsamen Kombinationseinrichtung KOM verbundene Basisstationszweige Zweig1 bis Zweig3 am Rand einer Zelle Z des zellularen Mobil-Kommunikationssystems mit einer Vielzahl von Zellen Z angeordnet. Die Basisstationszweige Zweig1 bis Zweig3 können damit gemeinsam, d.h. gleichzeitig und mit hoher Qualität, eine Kommunikationsverbindung zu einer Mobilstation MS sicherstellen. Die Kombinationseinrichtung KOM und die Basisstationszweige Zweig1 bis Zweig3 bilden eine Basisstation BS, die sich entsprechend der Zellstruktur des Mobil-Kommunikationssystems wiederholen kann.

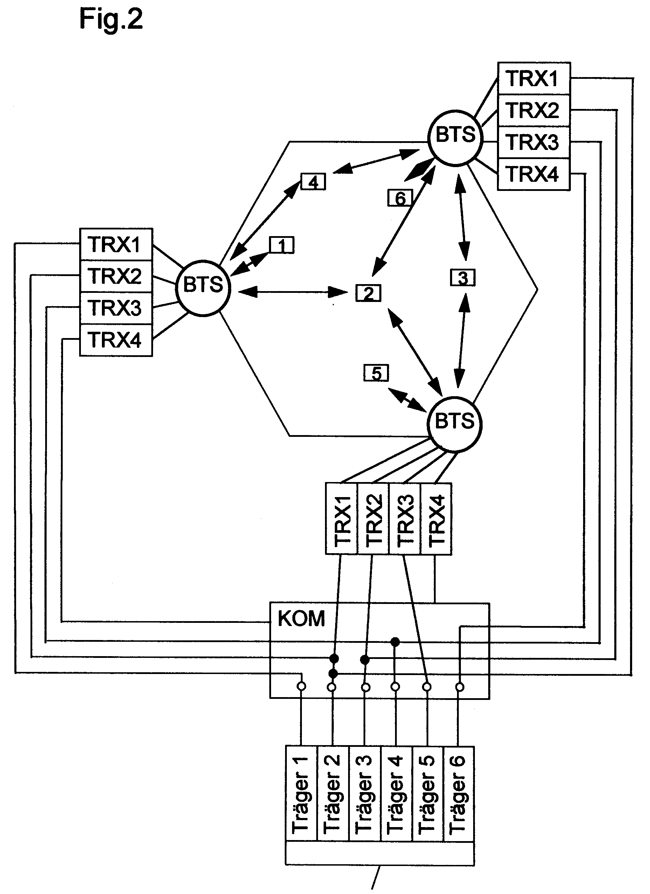

Die Basisstation BS nach FIG 2 empfängt beispielsweise Informationen auf sechs verschiedenen Trägern, d.h. auf einen Zeitschlitz bezogen können maximal sechs Kommunikationsverbindungen zu Mobilstationen bestehen. Diese sechs verschiedenen Träger, die physikalischen Kanälen entsprechen, werden auf die Kombinationseinrichtung KOM geführt. Diese Kombinationseinrichtung KOM schaltet die physikalischen Kanäle auf einzelne Zweige, die durch Basis-Sende/Empfangsstationen BTS realisiert sind.

Beispielsweise drei Basis-Sende/Empfangsstationen BTS, es könnte sich alternativ auch um zwei Basis-Sende/Empfangsstationen oder eine Vielzahl von Basis-Sende/Empfangsstationen handeln, sind am Rand einer gemeinsamen Zelle angeordnet und versorgen beispielsweise sechs durch Ziffern gekennzeichnete Mobilstationen. Um sechs Mobilstationen während eines Zeitschlitzes durch alle Basis-Sende/Empfangsstationen BTS gleichzeitig zu versorgen, wäre es nötig, auf allen Basis-Sende/Empfangsstationen Sende- und Empfangseinrichtungen TRX für sechs verschiedene Trägerfrequenzen bereitzustellen.

Erfindungsgemäß wird jedoch eine kleinere Anzahl, in FIG 2 vier, von Sende- und Empfangseinrichtungen TRX1 bis TRX4 bereitgestellt. Die Anzahl der Sende- und Empfangseinrichtungen pro Basisstationszweige ist größer 1, jedoch kleiner als die netzseitige Anzahl der physikalischen Kanäle bis zur Kombinationseinrichtung KOM.

Die physikalischen Kanäle zwischen den Basisstationszweigen und der Kombinationseinrichtung KOM sind durch die Kombinationseinrichtung KOM schaltbar. Dadurch ist es möglich, auch mit den beispielhaft vier Sende- und Empfangseinrichtungen TRX1 bis TRX4 pro Basis-Sende/Empfangsstationen BTS sechs Kommunikationsverbindungen während einer Zeitlage sicherzustellen. Die Mobilstationen 1, 5, 6, die sich nahe einer einzelnen Basis-Sende/Empfangsstation BTS befinden, werden ausschließlich durch diese Basis-Sende/Empfangsstation BTS versorgt, währenddessen andere Mobilstationen 3, 4 durch zwei Basis-Sende/Empfangsstationen BTS oder eine weitere Mobilstation 2 durch drei Basis-Sende/Empfangsstation BTS versorgt werden.

Die Anzahl der Sende- und Empfangseinrichtungen, die bei der Netzplanung für jeden Basisstationszweig vorzusehen sind, kann mit nachrichtenverkehrstheoretischen Methoden bestimmt werden. Aus dem zu erwartenden Verkehr für eine Zelle und der maximal zulässigen Blockierungsrate kann die Last pro Basisstationszweig, d.h. Diversitätszweig einer Kommunikationsverbindung bestimmt werden. Diese Last kann insoweit modelliert werden, als daß die mittlere Anzahl der Diversitätszweige pro Kommunikationsverbindungen < 3 beispielsweise zwischen 1,2 und 1,5 liegt. Die Last pro Zweig ist jedoch von den speziellen Gegebenheiten einer einzelnen Zelle abhängig, so daß eine gewisse Sicherheitsspanne einzuplanen ist. Aus der Last pro Zweig kann nunmehr die Anzahl der nötigen Sende -und Empfangseinrichtungen pro Basisstationszweig bestimmt werden.

Die Zu- bzw. Abschaltung von Basisstationszweigen (physikalische Kanäle zu den Sende- und Empfangseinrichtungen dieser Zweige) erfolgt durch die Kombinationseinrichtung KOM entsprechend der Übertragungsqualität für diese Kommunikationsverbindung insgesamt und auf den einzelnen Zweigen.

Üblicherweise wird eine erforderliche Übertragungsqualität innerhalb des Mobil-Kommunikationssystems definiert, die anhand des Empfangspegels, der Bitfehlerrate, des Signal-Rauschverhältnisses, des Verhältnisses von Nutzsignal zu Störsignal bzw. einer Kombination dieser Meßgrößen herleitbar ist. Unterschreitet die Übertragungsqualiät einen ersten Schwellwert, so kann durch die Kombinationseinrichtung KOM veranlaßt werden, daß ein weiterer Basisstationszweig für diese Kommunikationsverbindung zugeschalten wird. Andererseits wird durch die Kombinationseinrichtung KOM ein Basisstationszweig - vorteilhafterweise der mit der schlechtesten Übertragungsqualität - aus der Kommunikationsverbindung ausgeschalten, wenn ein zweiter Schwellwert bezüglich der Übertragungsqualität überschritten wird bzw. er keinen signifikanten Beitrag zur Signalqualität liefert.

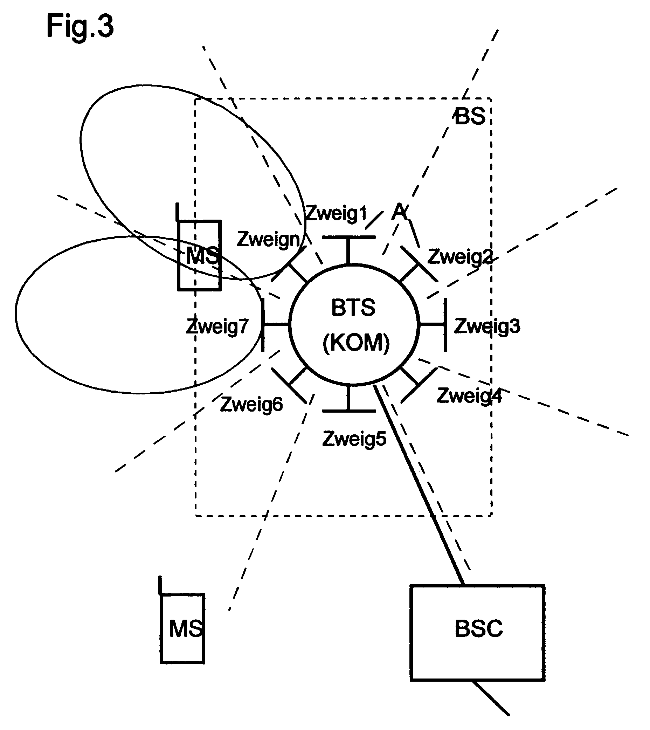

In FIG 3 ist eine weitere Basisstation BS angegeben, die aus einer Basis-Sende/Empfangsstation BTS mit Kombinationseinrichtung KOM besteht. Die Basisstation BS ist mit einem Basisstationscontroller BSC verbunden, der den Zugang zum Mobil-Kommunikationssystem wie für FIG 1 erläutert herstellt.

Der Basisstation BS sind Sektorantennen A zugeordnet, die als Antenneneinrichtungen Sendesignale abstrahlen bzw. Empfangssignale aufnehmen. Die Sektorantennen A bilden die Basisstationszweige Zweig1 bis Zweign und sind dabei jeweils so ausgerichtet, daS die Zelle, die die Basisstation BS umgibt, in verschiedene Sektoren unterteilt ist. Die Sektoren der einzelnen Sektorantennen A überlappen sich dabei, so daß eine Kommunikationsverbindung zu einer Mobilstation MS über zumindest zwei Sektorantennen A möglich ist. Die Sektorantennen A können ebenfalls als eine Antenne oder mehrere Antennen mit elektronischer Auslenkung des Abstrahlungsdiagramms ausgestaltet sein.

Durch diese Sektorisierung einer Zelle eines zellularen Mobilfunksystems ist es möglich, die abgestrahlte und empfangene Störleistung zu verringern, sowie die gleiche Trägerfrequenz einer Basisstation BS für verschiedene durch ihre Richtung in Bezug auf die Basisstation BS unterschiedbare Mobilstationen MS zu nutzen. Um dies sicherzustellen sind die Sektorantennen A mit individuellen Sende- und Empfangseinrichtungen verbunden, die wiederum mit der Kombinationseinrichtung KOM verbunden sind. Über die Kombinationseinrichtung KOM erfolgt die Zuschaltung von durch Sektorantennen A repräsentierte Zweige zu den netzseitigen physikalischen Kanälen vom und zum Basisstationscontroller BSC.

Auch bei dieser Basisstation BS ist es nach der Erfindung möglich, durch den Einsatz der Kombinationseinrichtung KOM die Anzahl der benötigten Sende- und Empfangseinrichtungen pro Sektorantenne A zu verringern, da Sektorantennen A, die an einer Sende- und Empfangseinrichtung nicht benötigt werden, aus einer Kommunikationsverbindung ausgeschalten werden und somit für weitere Kommunikationsverbindungen zur Verfügung stehen.

Erfindungsgemäß ist es vorteilhaft, daß die Sende- und Empfangseinrichtungen der Basisstationen BS nach FIG 2 und FIG 3 zeitschlitzbezogen auf verschiedene Trägerfrequenzen umschaltbar sind. Damit werden die Frequenzressourcen innerhalb einer Zelle verbessert genutzt und mit dem zur Verfügung stehenden Frequenzband eine hohe Netzkapazität verwirklicht.

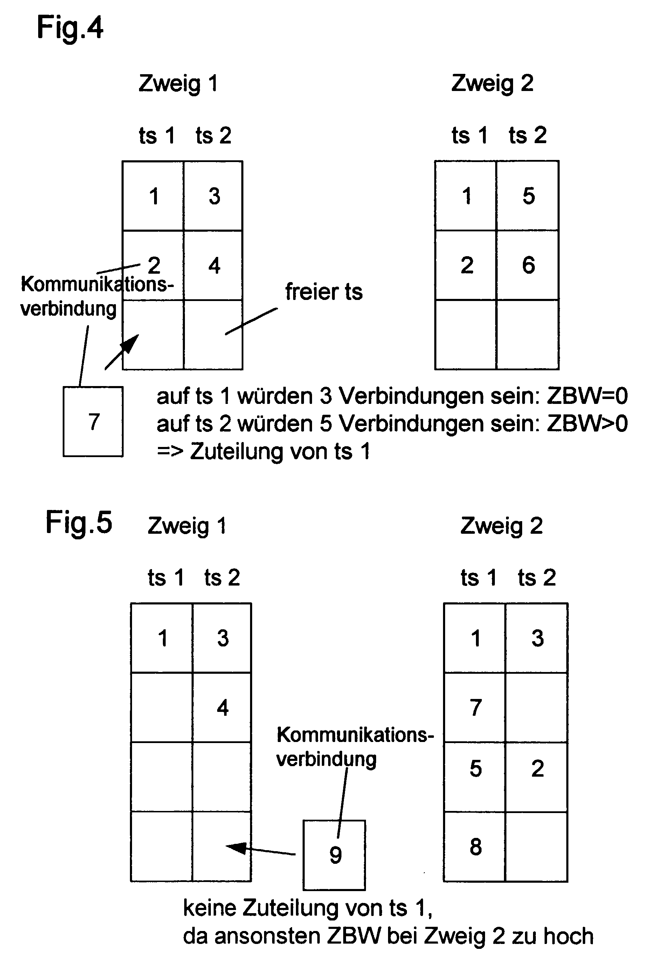

Anhand der FIG 4 und 5 wird erläutert, anhand welcher Kriterien beispielsweise eine Zuweisung eines Zeitschlitzes für eine Kommunikationsverbindung erfolgt und wie eine Umgruppierung der Kommunikationsverbindungen in vorteilhafter Weise erfolgen kann. Im folgenden wird ein Basisstationszweig als Zweig zur Versorgung einer Mobilstation MS bezeichnet.

Die Wahrscheinlichkeit, daß für eine bestehende Kommunikationsverbindung, die einen zusätzlichen Zweig benötigt, eine Sende- und Empfangseinrichtung für den entsprechenden Zeitschlitz nicht zur Verfügung steht, soll möglichst gering gehalten werden. Diese Wahrscheinlichkeit wird im folgenden Zuschaltblockierwahrscheinlichkeit genannt, um sie von der Aufbaublockierwahrscheinlichkeit (Wahrscheinlichkeit, daß bei Gesprächsaufbau die erforderlichen Zweige nicht verfügbar sind) zu unterscheiden.

Die Minimierung der Zuschaltblockierwahrscheinlichkeit sollte vorteilhafterweise Vorrang vor einer Minimierung der Aufbaublockierwahrscheinlichkeit haben, um bestehende Kommunikationsverbindungen mit ausreichender Qualität zu sichern.

Das Ziel, beide Wahrscheinlichkeiten gering zu halten, läßt sich erreichen durch:

- eine geeignete Zeitschlitzzuteilungsstrategie beim Verbindungsaufbau, und
- ein Verlegen bestehender Verbindungen auf andere Zeitschlitze.

Zu Beginn (z.B. einige Sekunden) einer Kommunikationsverbindung wird diese von mehreren oder allen, beispielsweise drei, Zweigen versorgt. Aufgrund der Messungen der jeweiligen Empfangspegel und/oder -qualitäten (Bitfehlerraten) wird dabei festgestellt, welche Zweige zur Versorgung der Kommunikationsverbindung erforderlich sind. Weiterhin kann für diese Kommunikationsverbindung ein neuer Zeitschlitz gesucht werden, so daß die bei der Verlegung auf diesen Zeitschlitz resultierende Zuschaltblockierwahrscheinlichkeit möglichst gering ist, und die Kommunikationsverbindung auf diesen Zeitschlitz verlegt. Optional kann auch der alte Kanal beibehalten werden, falls damit die Zuschaltblockierwahrscheinlichkeit gering war, z.B. kleiner als ein einstellbarer Schwellwert oder nicht viel größer als die neue Zuschaltblockierwahrscheinlichkeit.

Die Zuschaltblockierwahrscheinlichkeit ZBW hängt von verschiedenen Größen ab:

- von der Anzahl der nicht belegten Sende- und Empfangseinrichtungen für den betreffenden Zeitschlitz.

Dabei ist nicht nur erheblich, wieviele Sende- und Empfangseinrichtungen an den benutzten Zweigen verbleiben, sondern auch an den derzeit von der Kommunikationsverbindung nicht benötigten Zweigen, siehe dazu FIG 4.

- von der Wahrscheinlichkeit, daß die auf dem jeweiligen Zeitschlitz bereits bestehenden Verbindungen einen neuen (zusätzlichen) Zweig benötigen.

Wenn eine Kommunikationsverbindung bereits alle Zweige benutzt, dann ist die Wahrscheinlichkeit, daß zusätzliche Zweige benötigt werden gleich null, vielmehr besteht für diese Kommunikationsverbindungen eine Wahrscheinlichkeit, daß ein Zweig freigegeben werden kann. Daher sind Zeitschlitze die bereits mehrere solcher Kommunikationsverbindungen bedienen, zu bevorzugen.

Wenn für eine Kommunikationsverbindung eine sehr gute Übertragungsqualität für einen Zweig besteht, ist es nicht sehr wahrscheinlich, daß für diese Kommunikationsverbindung ein neuer Zweig benötigt wird. Werte für diese Wahrscheinlichkeit, daß eine Kommunikationsverbindung demnächst ein neuer Zweig benötigt wird, lassen sich aus Messungen des Empfangspegels bzw. der -qualität, sowohl bei dem derzeit verwendeten als auch bei den derzeit nicht verwendeten Zweigen, sowie aus Trendanalysen abschätzen.

Aus den genannten Größen lassen sich Schätzwerte für Zuschaltblockierwahrscheinlichkeiten berechnen und der Zeitschlitz, für den diese Zuschaltblockierwahrscheinlichkeit minimal ist, kann ermittelt werden. Allerdings sind exakte Berechnungen schwierig und aufwendig, so daß heuristische Methoden bei der Zeitschlitzauswahl vorteilhaft sind.

Bezeichnungen:

B          Anzahl der Zweige,
N          Anzahl der Sende- und Empfangseinrichtungen pro Zweig,
$n_b(ts)$   Anzahl belegter Sende- und Empfangseinrichtungen auf dem Zeitschlitz ts am Zweig b.

Regel 1:
wähle einen Zeitschlitz ts, so daß

$$K1 = max\,(n_b(ts))$$

für b=1..B minimal ist.

Regel 2:
wähle einen Zeitschlitz ts, so daß

$$K2 = \sum_{b=1}^{B} (n_b(ts))$$

minimal ist.

Regel 3:
wähle einen Zeitschlitz ts, bei dem die Anzahl der Kommunikationsverbindungen, die auf diesem Zeitschlitz bedient werden, minimal ist, siehe FIG 5.

Regel 4:
berechne aus Messungen der Empfangspegel bzw. -qualitäten oder ggf. der Trendanalyse Schätzwerte für die Wahrscheinlichkeit, daß die i-te Kommunikationsverbindung auf Zeitschlitz ts demnächst den Zweig b zusätzlich benötigt bzw. den Zweig b freigeben kann. Diese Wahrscheinlichkeiten werden mit

$$w_b^+(ts) \qquad bzw. \qquad w_b^-(ts)$$

bezeichnet.

Aus diesen Wahrscheinlichkeiten $w_b^+(ts)$ und $w_b^-(ts)$ läßt sich die Wahrscheinlichkeit $ZBW_b(ts)$ berechnen, daß für eine bestehende Kommunikationsverbindung, die den Zweig b benötigt, eine erforderliche Sende- und Empfangseinrichtung für den entsprechenden Zeitschlitz ts bei diesem Zweig b nicht zur Verfügung steht.

Damit ergibt sich für die Zuschaltblockierwahrscheinlichkeit für den Zeitschlitz ts:

$$ZBW(ts) = 1 - (1 - ZBW_1(ts)) * .. * (1 - ZBW_b(ts)) * .. * (1 - ZBW_B(ts)) \ .$$

Regel 4 lautet folglich: wähle einen Zeitschlitz ts bei dem ZBW(ts) minimal ist.

Demnächst bezeichnet einen Zeitraum, für den sich zuverlässige Aussagen über die Entwicklung von Kommunikationsverbindungen treffen lassen. Die Größenordnung kann im Bereich von 1..5 s liegen, sie ist jedoch abhängig von der Geschwindigkeit der Mobilstation und der Zelltopologie. Der Zeitraum kann als Parameter im System einstellbar sein.

Die Zeitschlitzzuteilungsstrategie ergibt sich beispielsweise (Abwandlungen im Sinne einer Minimierung der Blockierungswahrscheinlichkeiten und ggf. verringertem Aufwand sind ebenso möglich):

Wähle Zeitschlitz ts nach Regel 1. Wenn mehrere Zeitschlitze auswählbar sind, dann wende Regel 2 an, u.s.w. Alternativ kann auch sofort Regel 4 oder eine andere Reihenfolge der Regeln angewandt werden, bzw. eine der Regeln 1 bis 3 sofort und alleinig.

Eine weitere Möglichkeit, die Zuschaltblockierwahrscheinlichkeit zu minimieren, ist eine Umgruppierung von Kommunikationsverbindungen, d.h. das Verlegen auf einen anderen Zeitschlitz ts.

Als Auslösekriterien können die Größen nach Regel 1 bis 4 (auch nur einzelne dieser Größen) jeweils mit einem Schwellwert verglichen werden. Dieses kann in regelmäßigen Abständen oder wenn ein Zeig benötigt wird, jedoch nicht zur Verfügung steht, oder wenn eine Sende- und Empfangseinrichtung freigegeben wird, überprüft werden.

Ein zu verlegendes Gesprächs wird dadurch bestimmt, indem überprüft wird, welche die Kommunikationsverbindung ist, die die Größen nach den Regeln 1 bis 4 am stärksten verringert. Die Auswahl des Zeitschlitzes ts geschieht wie zu Beginn der Kommunikationsverbindung. Es kann vorgesehen sein, daß die Verlegung nur durchgeführt wird, wenn sich die nach den Regel 1 bis 4 bestimmten Größen der beiden Zeitschlitze sich um einen Schwellwert unterscheiden.

Durch die Anwendung der Regeln, insbesondere der Regeln 1 und 2, wird gleichzeitig die Aufbaublockierwahrscheinlichkeit verringert, da die Zeitschlitze gleichmäßig aufgefüllt werden.

**Patentansprüche**

1. Basisstation (BS) für Kommunikationsverbindungen zu Mobilstationen (MS) über Funkschnittstellen, mit zumindest einer Kombinationseinrichtung (KOM),

   - an die zumindest zwei Basisstationszweige (Zweig1,..,Zweign) zum Versorgen einer Zelle (Z) angeschlossen sind,
   - die zur Überwachung der Übertragungsqualität für eine Kommunikationsverbindung zwischen einer Mobilstation (MS) und den zumindest zwei Basisstationszweigen (Zweig1,.., Zweign) vorgesehen ist,
   - die entsprechend der Übertragungsqualität Basisstationszweige (Zweig1,..,Zweign) für diese Kommunikationsverbindung in beiden Übertragungsrichtungen zuschaltet bzw. Basisstationszweige (Zweig1,..,Zweign) aus dieser Kommunikationsverbindung ausschaltet,

   wobei ein Basisstationszweig (Zweig1,..,Zweign), der für eine Kommunikationsverbindung abgeschalten wurde, auf einer anderen Trägerfrequenz für eine weitere Kommunikationsverbindung zugeschalten wird.

2. Basisstation (BSS) nach Anspruch 1, bei der die Basisstationszweige (Zweig1,..,Zweign) durch Basis-Sende/Empfangsstationen (BTS), die jeweils am Rande der Zelle (Z) angeordnet sind, gebildet werden.

3. Basisstation (BSS) nach Anspruch 1, bei der die Basisstationszweige (Zweig1,..,Zweign) durch Sektorantennen (A), denen unterschiedliche Sektoren einer Zelle (Z) zugeordnet sind, gebildet werden.

4. Basisstation (BSS) nach Anspruch 1, 2 oder 3, die nach dem Zeitmultiplex-Verfahren betrieben wird, wobei das Zu- und Ausschalten eines Basisstationszweiges (Zweig1 ,.., Zweign) bezüglich einer Kommunikationsverbindung zeitschlitzbezogen gesteuert ist.

5. Basisstation (BSS) nach einem der vorhergehenden Ansprüche, bei der die Überwachung der Übertragungsqualität zyklisch wiederholt wird.

6. Basisstation (BSS) nach einem der vorhergehenden Ansprüche, bei der die Versorgung einer Mobilstation (MS) durch mehrere Basisstationszweige (Zweig1,..,Zweign) während eines Zeitschlitzes auf einer gemeinsamen Trägerfrequenz erfolgt.

7. Basisstation (BSS) nach einem der vorhergehenden Ansprüche, bei der Sendeeinrichtungen so ausgestaltet sind, daß zeitschlitzbezogen ein Umschalten der Trägerfrequenz möglich ist.

8. Basisstation (BSS) nach einem der vorhergehenden Ansprüche, mit zumindest einem Organisationskanal (BCCH), dessen Trägerfrequenz bevorzugt für Kommunikationsverbindungen genutzt wird, die von mehreren Basisstationszweigen (Zweig1,.., Zweign) versorgt wird.

9. Basisstation (BSS) nach einem der vorhergehenden Ansprüche, bei der physikalische Kanäle zwischen einer Kombinationseinrichtung (KOM) und einem Basisstationszweig (Zweig1,.., Zweign) schaltbar sind.

10. Basisstation (BSS) nach einem der vorhergehenden Ansprüche, bei der durch die Kombinationseinrichtung (KOM) ein Umgruppieren der physikalischen Kanäle für eine Kommunikationsverbindung vorgesehen ist, falls die Übertragungsqualität der Kommunikationsverbindung über mehrere Basisstationszweige (Zweig1,..,Zweign) überwacht werden soll.

11. Verfahren zur Versorgung einer Zelle eines zellularen Mobilfunksystem

    - mit zumindest einer Kombinationseinrichtung (KOM) zur Verbindungssteuerung zu zumindest zwei Basisstationszweigen (Zweig1,..,Zweign),
    - wobei die Basisstationszweige (Zweig1,..,Zweign) zum Versorgen einer Zelle vorgesehen sind,

bei dem durch die Kombinationseinrichtung (KOM)

- eine Überwachung der Übertragungsqualität für eine Kommunikationsverbindung zwischen einer Mobilstation (MS) und zumindest zwei Basisstationszweigen (Zweig1,..,Zweign) durchgeführt wird,
- entsprechend der Übertragungsqualität Basisstationszweige (Zweig1,..,Zweign) für diese Kommunikationsverbindung in beiden Übertragungsrichtungen zugeschalten bzw. Basisstationszweige (Zweig1,..,Zweign) aus dieser Kommunikationsverbindung ausgeschalten werden,

wobei ein Basisstationszweig (Zweig1,..,Zweign), der für eine Kommunikationsverbindung abgeschalten wurde, auf einer anderen Trägerfrequenz für eine weitere Kommunikationsverbindung zugeschalten wird.

**12.** Verfahren nach Anspruch 11,
wobei das Mobilfunksystem auf der Funkschnittstelle ein Zeitmultiplex-Verfahren nutzt und das Zu- und Ausschalten eines Basisstationszweiges (Zweig1 ,.., Zweign) bezüglich einer Kommunikationsverbindung zeitschlitzbezogen gesteuert ist.

**13.** Verfahren nach Anspruch 12,
bei dem einer Kommunikationsverbindung ein Zeitschlitz (ts) zugewiesen wird, so daß die Anzahl belegter Sende- und Empfangseinrichtungen auf diesem Zeitschlitz (ts) in einem Zweig (b) minimal ist.

**14.** Verfahren nach Anspruch 13,
bei dem einer Kommunikationsverbindung ein Zeitschlitz (ts) zugewiesen wird, so daß die Anzahl belegter Sende- und Empfangseinrichtungen für diesen Zeitschlitz (ts) in dem Zweig (b) mit der größen Anzahl belegter Sende- und Empfangseinrichtungen minimal ist.

**15.** Verfahren nach Anspruch 12,
bei dem einer Kommunikationsverbindung ein Zeitschlitz (ts) zugewiesen wird, so daß die Summe der belegten Sende- und Empfangseinrichtungen auf allen Zweigen (b) für diesen Zeitschlitz (ts) minimal ist.

**16.** Verfahren nach Anspruch 12,
bei dem einer Kommunikationsverbindung ein Zeitschlitz (ts) zugewiesen wird, so daß die Anzahl der Kommunikationsverbindungen, die auf diesem Zeitschlitz (ts) bedient werden, minimal ist.

**17.** Verfahren nach Anspruch 12,
bei dem einer Kommunikationsverbindung ein Zeitschlitz (ts) zugewiesen wird, so daß eine Gesamtzuschaltblok- kierwahrscheinlichkeit (ZBW(ts)) als Verknüpfung der Zuschaltblockierwahrscheinlichkeiten

$$\mathbf{ZBW(ts)} = 1 - (1 - \mathbf{ZBW_1(ts)})^* .. ^* (1 - \mathbf{ZBW_b(ts)})^* .. ^* (1 - \mathbf{ZBW_B(ts)})$$

einzelner Zweige (b) minimal ist.

**18.** Verfahren nach einem der Ansprüche 12 bis 16,
bei dem eine bereits bestehende Kommunikationsverbindung auf einen ausgewählten Zeitschlitz (ts) verlegt wird, wobei eine Kommunikationsverbindung zum Verlegen ausgewählt wird, die die Zuschaltblockierwahrscheinlichkeit am stärksten verringert.

Fig.1

# Fig.2

# Fig.3

# Fig.4

Zweig 1

Zweig 2

ts 1    ts 2

| 1 | 3 |
| 2 | 4 |
| | |

ts 1    ts 2

| 1 | 5 |
| 2 | 6 |
| | |

Kommunikationsverbindung

freier ts

7

auf ts 1 würden 3 Verbindungen sein: ZBW=0
auf ts 2 würden 5 Verbindungen sein: ZBW>0
=> Zuteilung von ts 1

# Fig.5

Zweig 1

Zweig 2

ts 1    ts 2

| 1 | 3 |
| | 4 |
| | |
| | |

ts 1    ts 2

| 1 | 3 |
| 7 | |
| 5 | 2 |
| 8 | |

Kommunikationsverbindung

9

keine Zuteilung von ts 1,
da ansonsten ZBW bei Zweig 2 zu hoch

| Europäisches Patentamt | EUROPÄISCHER RECHERCHENBERICHT | Nummer der Anmeldung<br>EP 96 11 4902 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 5 542 107 A (KAY STANLEY E) 30.Juli 1996<br>* Spalte 2, Zeile 8 - Zeile 36 *<br>* Spalte 5, Zeile 5 - Zeile 46 *<br>--- | 1,11 | H04Q7/36<br>H04B7/06 |
| A | WO 95 06369 A (NOKIA TELECOMMUNICATIONS OY ;SUONVIERI JUKKA (FI)) 2.März 1995<br>* Seite 3, Zeile 1 - Zeile 30 *<br>* Seite 5, Zeile 12 - Seite 6, Zeile 31 *<br>* Seite 7, Zeile 4 - Seite 8, Zeile 9 *<br>--- | 1,11 | |
| A | WO 92 17954 A (PACTEL CORP) 15.Oktober 1992<br>* Seite 7, Zeile 4 - Zeile 20 *<br>* Seite 15, Zeile 31 - Seite 16, Zeile 5 *<br>* Seite 17, Zeile 4 - Zeile 21 *<br>* Seite 21, Zeile 12 - Seite 22, Zeile 4 *<br>* Seite 26, Zeile 16 - Seite 27, Zeile 21 *<br>--- | 1,11 | |
| A | DE 43 43 765 A (DETECON DEUTSCHE TELEPOST CONS) 22.Juni 1995<br>* Seite 2, Zeile 35 - Zeile 53 *<br>----- | 1,11 | RECHERCHIERTE SACHGEBIETE (Int.Cl.6)<br><br>H04Q<br>H04B |

Der vorliegende Recherchenbericht wurde für alle Patentansprüche erstellt

| Recherchenort | Abschlußdatum der Recherche | Prüfer |
|---|---|---|
| DEN HAAG | 26.Februar 1997 | Gerling, J.C.J. |